# EUROPÄISCHE PATENTSCHRIFT

(11) **EP 1 035 344 B1**
(45) Veröffentlichungstag und Bekanntmachung des Hinweises auf die Patenterteilung: **24.09.2003**
(21) Anmeldenummer: 00102186.4
(22) Anmeldetag: 09.02.2000
(51) Int. Cl.: F16D 48/06

(54) **Verfahren und Vorrichtung zur Steuerung einer Kraftfahrzeugkupplung in einem Haltemodus**
Method and device to control a vehicle clutch in a hold mode
Procédure et dispositif pour commander l'embrayage d'un véhicule dans un mode d'arrêt

(30) Priorität: 10.03.1999 DE 19910573
(43) Veröffentlichungstag der Anmeldung: 13.09.2000
(73) Patentinhaber: Volkswagen Aktiengesellschaft, 38436 Wolfsburg (DE)
(72) Erfinder: Hinrichsen, Uwe, Dr., 38124 Braunschweig (DE); Bothe, Edgar, Dipl.-Ing., 31224 Peine (DE)

(56) Entgegenhaltungen:
- EP-A- 0 807 561
- DE-A- 19 654 670
- DE-A- 19 733 465
- US-A- 5 788 040

## Beschreibung

Die Erfindung betrifft ein Verfahren zur Steuerung einer Kraftfahrzeugkupplung in einem Haltemodus gemäß dem Oberbegriff des Patentanspruchs 1 bzw. eine Vorrichtung zur Steuerung einer Kraftfahrzeugkupplung in einem Haltemodus.

Bei Anfahr- und Haltevorgängen eines Kraftfahrzeuges an einer Steigung kommt es häufig zu einem ungewollten Zurückrollen des Kraftfahrzeuges. Die Ursache dafür sind meist Koordinierungsprobleme des Fahrers oder eines Steuergerätes bezüglich einer Brems-, Kupplungs- und Gasbetätigung. Da aber auch ein ungewolltes Vorwärtsrollen, z.B. an einer Gefällstrecke, und eine ungewollte Bewegung des Kraftfahrzeuges auf ebener Fahrbahn aufgrund von äußeren Kräften, z.B. wegen starken Windes, möglich ist, kann verallgemeinernd von einer Bewegung des Kraftfahrzeuges in eine unerwünschte Richtung gesprochen werden. Der Begriff des ungewollten Zurückrollens wird im folgenden für eine Bewegung des jeweiligen Kraftfahrzeuges in eine Richtung verwendet, die sinngemäß einer eingelegten Fahrstufe bei einem Automatikgetriebe bzw. einem geschalteten Gang bei einem manuell schaltbaren Stufengetriebe entgegengerichtet ist.

In der Vergangenheit sind unterschiedlichste Vorrichtungen und Verfahren zu einer Vermeidung eines ungewollten Zurückrollens von Kraftfahrzeugen bekannt geworden. Wie aus der US 48 67 291, der DE 43 33 787 A1, und der DE 196 20 131 A1 ersichtlich ist, gibt es mechanische Rückrollsperren, die als Freilaufsperren ausgebildet und jeweils an einem Getriebe angeordnet sind. Diese Rückrollsperren sind durch unterschiedliche Ausbildung bedarfsweise aktivierbar oder deaktivierbar. Aus der DE 40 25 069 C1 ist ein Kraftfahrzeug mit einem selbstätig schaltenden Gangwechselgetriebe und einer als Bergstütze verwendeten Freilaufkupplung bekannt, das eine selbsttätige Steuerung des Arbeitsdruckes von reibschlüssigen Schaltelementen zur Sicherung der Funktion der Freilaufkupplung aufweist. Im Zuge fortschreitender Entwicklung und Verbreitung insbesondere elektronischer Steuerungsund Regelungstechnik, kommen zunehmend Vorrichtungen und Verfahren zur Anwendung, die vorhandene Baugruppen des Kraftfahrzeuges, wie beispielsweise Bremsen und Kupplungen, durch entsprechende Steuerungen zur Vermeidung eines ungewollten Zurückrollens nutzen. So ist aus der DE 195 30 612 A1 eine Steuerung einer automatischen Kupplung bekannt, bei der eine in Kriechphasen mit Schlupf arbeitende Kupplung erst dann vollständig geöffnet wird, wenn eine Betriebsbremse mit einer vorgebbaren Wirkung arbeitet. In der EP 0 812 747 A2 wird eine Vorrichtung und ein Verfahren zum Festhalten und Lösen von druckmittelbetätigten Fahrzeugbremsen für eine Anfahrhilfe auf einer geneigten Fahrbahn beschrieben. Diese Vorrichtung weist eine Ventileinrichtung zum Festhalten und Freigeben eines Bremsmitteldruckes in einer Druckmittelzuleitung zu einigen oder allen Radbremsen und einen Neigungssensor zum Feststellen der Neigung eines Fahrzeuges gegenüber einer horizontalen Ebene auf. Aus der gattungsbildenden DE 196 54 670 A1 ist ein Verfahren zum Steuern einer Rückwärtsfahrsperre eines Fahrzeuges in einem Vorwärtsfahrmodus eines Automatikgetriebes bekannt Es ist ein Erzeugen eines Frequenzsignales vorgesehen, welches eine Fahrzeuggeschwindigkeit und eine Fahrzeugfahrrichtung angibt, ein Bestimmen, ob Kriechen auftritt, und ein Steuern eines Automatikgetriebes anhand eines Ergebnisses dieser Bestimmung und des Frequenzsignales.

Weiterhin ist im Stand der Technik ein Verfahren zur Steuerung einer Kraftfahrzeugkupplung bekannt (DE 197 33 465 A1), bei dem Fahrparameter eines Kraftfahrzeugs ermittelt werden und ein ungewolltes Zurückrollen des Kraftfahrzeuges durch eine Auswertung der Fahrparameter erkannt wird. Hierzu ist eine Steuereinrichtung vorgesehen, die ein Kupplungsmoment so lange erhöht, bis das Fahrzeug bei eingelegter Vorwärtsstufe nicht mehr rückwärts oder bei eingelegter Rückwärtsfahrstufe nicht mehr vorwärts rollt bzw. ein vorbestimmtes maximales Kupplungsmoment erreicht ist. Nachteilig bei diesem Verfahren bzw. dieser Steuerung ist, dass bspw. wenn das Kraftfahrzeug an einer Steigung nach dem Erreichen eines Stillstandes abgestellt und wieder gestartet wird, das Verfahren im Grunde wieder von vorne beginnen muß, d.h. das entsprechende übertragbare Drehmoment wieder von Null ausgehend gesteigert werden muß. Die Praxis hat gezeigt, dass dies entsprechend Zeit in Anspruch nimmt und in der Regel auch durchaus mit einem geringen ungewollten Zurückrollen verbunden sein kann.

Der vorliegenden Erfindung liegt daher die Aufgabe zugrunde, das gattungsgemäße Verfahren bzw. die gattungsgemäße Vorrichtung derart auszugestalten und weiterzubilden, dass auch ein ungewollten Zurückrollen zuverlässig vermieden ist, wenn das Fahrzeug zum Beispiel abgestellt ist und wieder gestartet wird.

Die zuvor aufgezeigte Aufgabe wird nun für das Verfahren gemäß den Merkmalen des Patentanspruches 1 bzw. durch die Vorrichtung gemäß den Merkmalen des Patentanspruches 9, die nach dem entsprechenden Verfahren arbeitet, gelöst. Dadurch, dass nun bei Erreichen eines Fahrzeugstillstandes ein Wert des momentan übertragbaren Drehmomentes ermittelt und abgespeichert wird, um als Anfangswert einer erneuten Steuerung verwendet zu werden, entfallen die eingangs beschriebenen Verzögerungszeiten zur Ermittlung eines anfänglich zu übertragbaren Drehmomentes, so dass auch ein entsprechendes ungewolltes Zurückrollen für diesen Fall vermieden ist.

Die Unteransprüche 2 bis 8 bzw. der Unteranspruch 10 beschreiben eine bevorzugte Weiterbildung des erfindungsgemäßen Verfahrens bzw. der erfindungsgemäßen Vorrichtung.

In dem Verfahren zur Steuerung einer Kraftfahrzeugkupplung in einem Haltemodus werden Fahrparameter eines Kraftfahrzeuges ermittelt und ein ungewolltes Zurückrollen des Kraftfahrzeuges durch eine Auswertung der Fahrparameter erkannt. Dem ungewollten Zurückrollen wird solange durch eine Steigerung eines übertragbaren Drehmomentes der Kraftfahrzeugkupplung entgegengewirkt, bis das Kraftfahrzeug zum Stillstand gekommen ist. Das Verfahren funktioniert unabhängig davon, ob eine Vorwärtsfahrstufe oder eine Rückwärtsfahrstufe eingelegt ist. Unter einem ungewollten Zurückrollen wird ein Rückwärtsrollen des Kraftfahrzeuges bei einer eingelegten Vorwärtsfahrstufe und ein Vorwärtsrollen des Kraftfahrzeuges bei einer eingelegten Rückwärtsfahrstufe verstanden. Der Begriff der Fahrstufe bezieht sich dabei sowohl auf die Fahrstufen eines Automatikgetriebes als auch auf Gänge eines manuell schaltbaren Stufengetriebes mit einer automatischen Kupplung. Das Verfahren arbeitet unabhängig von einer Bremsbetätigung. Die Kraftfahrzeugkupplung ist dazu derart ausgebildet, daß das durch sie übertragbare Drehmoment steuerbar ist. Hierfür kommen bevorzugt Lamellenkupplungen in Frage, deren übertragbares Drehmoment über eine Druckänderung eines in der Kupplung wirksamen Druckmittels steuerbar ist. Denkbar sind jedoch auch über Stellglieder steuerbare Reibkupplungen, die derart ausgebildet sind, daß längere Schlupfphasen insbesondere thermisch verkraftbar sind.

Als Fahrparameter können eine eingelegte Fahrstufe eines Getriebes, eine Fahrtrichtung und eine Fahrgeschwindigkeit des Kraftfahrzeuges ermittelt werden. Die Fahrtrichtung kann im allgemeinen nur bei Vorliegen einer meßbaren Fahrgeschwindigkeit bestimmt werden. Aus einem Vergleich zwischen der Fahrtrichtung und der eingelegten Fahrstufe ergibt sich, ob das Kraftfahrzeug ungewollt zurückrollt, oder aber entsprechend der eingelegten Fahrstufe vorwärtsrollt bzw. in eine gewünschte Richtung rollt. Bei einem Rollen des Fahrzeuges in die gewünschte Richtung, d.h. bei einem Vorwärtsrollen bei eingelegter Vorwärtsfahrstufe und bei einem Rückwärtsrollen bei eingelegter Rückwärtsfahrstufe, wird eine solche Bewegung durch den Haltemodus absichtlich nicht unterbunden. Das Kraftfahrzeug muß dann notfalls durch eine Bremsbetätigung festgehalten werden.

Eine Steigerungsrate des übertragbaren Drehmomentes der Kraftfahrzeugkupplung kann in Abhängigkeit von der Fahrgeschwindigkeit gesteuert werden, mit der das Kraftfahrzeug ungewollt zurückrollt. Je größer die Fahrgeschwindigkeit ist, mit der das Kraftfahrzeug ungewollt zurückrollt, um so schneller und stärker wird einer solchen Bewegung entgegengewirkt. Es ist somit vorteilhaft, das übertragbare Drehmoment in Abhängigkeit von der Fahrgeschwindigkeit zu steigern. Die Abhängigkeit kann dabei linear, progressiv oder degressiv sein. Die Steigerungsrate sollte allerdings so bemessen sein, daß ein Übersteuern, d.h. ein Vorwärtsrollen nach vorhergehendem Rückwärtsrollen, vermieden wird.

Das übertragbare Drehmoment kann bis zu einem vorgegebenen Maximalwert gesteigert werden. Die Festlegung eines vorgegebenen Maximalwertes des übertragbaren Drehmomentes der Kraftfahrzeugkupplung ergibt sich z.B. dadurch, daß ein als Verbrennungsmotor ausgebildeter Antriebsmotor nur ein begrenztes Drehmoment aufbringen kann. Eine Festlegung des übertragbaren Drehmomentes auf einen noch niedrigeren Wert kann jedoch auch sinnvoll sein, z.B. wenn der Antriebsmotor bei einer höheren Belastung nur noch mit reduzierten Komforteigenschaften läuft. Im übrigen sollte der vorgegebene Maximalwert so gewählt werden, daß eine in der Kraftfahrzeugkupplung anfallende Verlustleistung sicher abgeführt werden kann.

Es kann ein Warnsignal ausgegeben werden, wenn das übertragbare Drehmoment der Kraftfahrzeugkupplung bis zu dem vorgegebenen Maximalwert gesteigert wurde, ohne daß das Kraftfahrzeug innerhalb einer vorgegebenen Zeitspanne zum Stillstand gekommen ist. Soll das Kraftfahrzeug beispielsweise an einem steilen Berg mit Hilfe der Kraftfahrzeugkupplung gehalten werden und ist der vorgegebene Maximalwert des übertragbaren Drehmomentes nicht ausreichend, um dies zu erreichen, kann ein Fahrer durch das Warnsignal auf diese Situation aufmerksam gemacht und z.B. zu einer Betätigung einer Bremse veranlaßt werden. Das Warnsignal kann optisch, z.B. durch ein Aufleuchten einer Warnlampe, und / oder akustisch, z.B. durch ein Aussenden eines Warntones, abgegeben werden.

In einem solchen Notfall kann auch eine mechanische Notrücklaufsperre aktiviert werden, nämlich, wenn das übertragbare Drehmoment der Kraftfahrzeugkupplung bis zu dem vorgegebenen Maximalwert gesteigert wurde, ohne daß das Kraftfahrzeug innerhalb der vorgegebenen Zeitspanne zum Stillstand gekommen ist. Durch eine derartige Steuerung werden der Antriebsmotor und die Kraftfahrzeugkupplung geschont und die Verkehrssicherheit erhöht. Die mechanische Notrücklaufsperre kann bevorzugt in einem Antriebsstrang des Kraftfahrzeuges angeordnet sein, z.B. zwischen der Kraftfahrzeugkupplung und dem Automatikgetriebe bzw. dem manuell schaltbaren Stufengetriebe. Um ein ungewolltes Abwürgen des Antriebsmotors zu vermeiden, sollte eine jeweilige Gegendrehrichtung des Antriebsstranges, z.B. durch einen Freilauf in der mechanischen Notrücklaufsperre, möglich sein. Alternativ könnte das übertragbare Drehmoment der Kraftfahrzeugkupplung bei Betätigung der mechanischen Notrücklaufsperre automatisch reduziert werden.

Bei Erreichen eines Fahrzeugstillstandes wird nun ein Wert des momentan übertragbaren Drehmomentes ermittelt und als Hillholdermoment abgespeichert, um als Anfangswert einer erneuten Steuerung verwendet zu werden. Das als Hillholdermoment bezeichnete momentan übertragbare Drehmoment kann aus Momentanwerten von Steuergrößen und / oder Meßgrößen und Kennlinien bzw. Kennfeldern der Kraftfahrzeugkupplung und des Antriebsmotors bestimmt werden und dann zur weiteren Verwendung abgespeichert werden. Wird das Kraftfahrzeug an einer Steigung nach dem Erreichen eines Stillstandes der beschriebenen Art abgestellt und wieder gestartet, so ist es vorteilhaft, wenn das übertragbare Drehmoment sofort wieder auf den Wert des zu einem Halten an dieser Steigung erforderlichen, zuvor ermittelten und abgespeicherten Hillholdermomentes als Ausgangspunkt einer erneuten Steuerung eingestellt wird.

Es kann eine von dem Kraftfahrzeug seit einem Stillstand zurückgelegte Wegstrecke ermittelt werden. Der Wert des Hillholdermomentes kann dann in Abhängigkeit von der zurückgelegten Wegstrecke modifiziert, insbesondere reduziert, und jeweils als neuer Wert des Hillholdermomentes abgespeichert werden. Da die Steigung einer Fahrbahn im allgemeinen nicht konstant ist, kann das Hillholdermoment in Abhängigkeit der zurückgelegten Wegstrecke reduziert werden, um ein Übersteuern des übertragbaren Drehmomentes der Kraftfahrzeugkupplung zu vermeiden. Der Wert des Hiltholdermomentes erreicht so nach einer gewissen Wegstrecke den Wert Null. Bei einem erneuten ungewollten Zurückrollen wird der Wert des dann erforderlichen Hillholdermomentes neu ermittelt.

In vorteilhafter Weise kann eine Bremsbetätigung registriert und eine Bremshaltezeit, d.h. eine Stillstandszeit mit Bremsbetätigung und eingelegter Fahrstufe, ermittelt werden. Das übertragbare Drehmoment der Kraftfahrzeugkupplung kann dann bis zum Erreichen einer Umschaltzeit auf den größeren der Werte des Hillholdermomentes und eines Kriechmomentes eingestellt werden und ab einem Überschreiten der Umschaltzeit auf den größeren der Werte des Hillholdermomentes und eines abgesenkten Kriechmomentes eingestellt werden. In vielen Fahrzeugen, insbesondere solchen mit Automatikgetriebe, wird in einem Kriechmodus einer Kupplungssteuerung bei einem Bremshalt das übertragbare Drehmoment der Kraftfahrzeugkupplung zunächst auf das vorgegebene Kriechmoment eingestellt, das derart bemessen ist, daß ein Zurückrollen auf ebener oder leicht ansteigender Fahrbahn ohne eine Bremsbetätigung verhindert wird. In der Regel muß das Kraftfahrzeug in einer solchen Situation durch eine Bremsbetätigung an einem Vorwärtsrollen gehindert werden. In moderneren Kupplungssteuerungen wird zur Schonung der Kraftfahrzeugkupplung und des Antriebsmotors und zur Verringerung von Kraftstoffverbrauch und Schadstoffemission in einem derartigen Haltezustand eine Standmomentenreduktion durchgeführt, d.h. das übertragbare Drehmoment der Kraftfahrzeugkupplung wird ab dem Überschreiten einer vorgegebenen Standzeit, die der o.a. Umschaltzeit entspricht, auf ein niedrigeres sogenanntes abgesenktes Kriechmoment eingestellt. Analog dazu ist es vorteilhaft, wenn das übertragbare Drehmoment im Haltemodus des beschriebenen Verfahrens zunächst auf den größeren der Werte des Hillholdermomentes und des Kriechmomentes und nach dem Überschreiten der Umschaltzeit auf den größeren der Werte des Hillholdermomentes und des abgesenkten Kriechmomentes eingestellt wird. Die Auswahl des jeweils größeren Wertes garantiert dabei einen optimalen Ausgangswert des eingestellten übertragbaren Drehmomentes im Falle eines erneuten ungewollten Zurückrollens. Die Bremsbetätigung muß dabei nur qualitativ, z.B. mittels eines ohnehin vorhandenen Bremslichtschalters, und nicht quantitativ erfaßt werden.

Die Vorrichtung zur Steuerung einer Kraftfahrzeugkupplung in einem Haltemodus, arbeitend gemäß dem Verfahren nach einem der Ansprüche 1 bis 8, ist mit einer auf die Kraftfahrzeugkupplung einwirkenden Drehmomentsteuerung versehen. Die Vorrichtung weist Sensoren zur Ermittlung von Fahrparametem eines Kraftfahrzeuges und eine Recheneinheit zur Auswertung der Fahrparameter und zur Erkennung eines ungewollten Zurückrollens des Kraftfahrzeuges auf.

Es kann ein Sensor zur Ermittlung der eingelegten Fahrstufe des Fahrzeuggetriebes, ein Sensor zur Ermittlung der Fahrtrichtung des Kraftfahrzeuges, und ein Sensor zur Ermittlung der Fahrgeschwindigkeit des Kraftfahrzeuges vorgesehen sein.

Im folgenden wird eine bevorzugte Ausführung des erfindungsgemäßen Verfahrens anhand eines Signalflußplanes näher erläutert.

Das Verfahren beginnt mit einer Berechnung einer Fahrgeschwindigkeit eines zugeordneten Kraftfahrzeuges. Dabei handelt es sich um eine Ermittlung eines Betrages der Geschwindigkeit. Darauf folgt eine Abfrage, ob das Kraftfahrzeug rollt. Im Falle, daß das Kraftfahrzeug rollt, wird zunächst eine Fahrtrichtung bestimmt, d.h. es wird ermittelt, ob das Kraftfahrzeug vorwärts oder rückwärts rollt. Danach wird eine sinngemäße Richtung einer eingelegten Fahrstufe eines zugeordneten Getriebes bestimmt, d.h. es wird die eingelegte Fahrstufe identifiziert. Danach folgt ein Vergleich der Fahrtrichtung des Kraftfahrzeuges und der sinngemäßen Richtung der eingelegten Fahrstufe des Getriebes. Aus diesem Vergleich ergibt sich dann in einer nachfolgenden Abfrage, ob das Kraftfahrzeug zurückrollt oder nicht. Unter einem Zurückrollen wird hier ein Rollen des Kraftfahrzeuges entgegen der sinngemäßen Richtung der eingelegten Fahrstufe verstanden, d.h. ein Rückwärtsrollen bei einer eingelegten Vorwärtsfahrstufe und ein Vorwärtsrollen bei einer eingelegten Rückwärtsfahrstufe. Im Falle, daß das Kraftfahrzeug zurückrollt, wird zunächst geprüft, ob ein maximales übertragbares Drehmoment einer zugeordneten Kraftfahrzeugkupplung erreicht ist. Trifft dies zu, so wird zur Berechnung der Fahrgeschwindigkeit zurückverzweigt. Optional - und daher im Signalflußplan gestrichelt dargestellt - kann zuvor ein Warnsignal ausgegeben werden. Falls das maximale übertragbare Drehmoment noch nicht erreicht ist, wird zunächst mittels der zuvor berechneten Fahrgeschwindigkeit eine Steigerungsrate des übertragbaren Drehmomentes berechnet und anschließend das momentane übertragbare Drehmoment der Kraftfahrzeugkupplung um die Steigerungsrate erhöht. Anschließend wird in Abhängigkeit des gerade neu eingestellten übertragbaren Drehmomentes und anderer Parameter ein neues Hillholdermoment ermittelt und abgespeichert. Danach wird die Fahrgeschwindigkeit erneut berechnet. Dem Zurückrollen wird also unabhängig von einer eventuell vorliegenden Bremsbetätigung durch eine Erhöhung des übertragbaren Drehmomentes der Kraftfahrzeugkupplung entgegengewirkt. Das übertragbare Drehmoment ist jedoch durch eine konstruktive Ausbildung der Kraftfahrzeugkupplung und eines mit dieser in Verbindung stehenden Antriebsmotors begrenzt. Reicht das derart festgelegte maximale Drehmoment nicht aus, um das Kraftfahrzeug am Zurückrollen zu hindern, was z.B. an einer sehr steilen Steigung der Fall sein kann, so kann es vorteilhaft sein, wenn ein Fahrer gewarnt wird. Durch die Ausgabe eines Wamsignals, die optisch, z.B. in Form eines Blinkens einer Wamleuchte, und / oder akustisch, zB. in Form eines Aussendens eines Signaltones, erfolgen kann, kann der Fahrer auf eine solche Gefahrensituation hingewiesen und veranlaßt werden, das Kraftfahrzeug durch eine Bremsbetätigung an einem weiteren Zurückrollen zu hindern.

Im Falle, daß die vorige Prüfung, ob das Kraftfahrzeug zurückrollt, negativ ausgefallen ist, d.h. das Kraftfahrzeug vorwärtsrollt, wird eine zurückgelegte Wegstrecke ab einem letzten Fahrzeugstillstand berechnet und davon abhängig der Wert eines Hillholdermomentes verringert. Der derart ermittelte neue Wert des Hillholdermomentes wird dann abgespeichert. Danach wird zur Berechnung der Fahrgeschwindigkeit zurückverzweigt. Unter dem Hillholdermoment wird ein Drehmoment verstanden, das als übertragbares Drehmoment der Kraftfahrzeugkupplung gerade so groß ist, daß das Kraftfahrzeug, an einer Steigung, an der sich das Kraftfahrzeug momentan befindet, gehalten wird. Der abgespeicherte Wert des Hillholdermomentes dient als Anfangswert einer erneuten Steuerung, die z.B. bei einem Wiederanfahren nach einem Parken des Kraftfahrzeuges erfolgen kann. Da sich die Steigung einer Fahrbahn in der Regel in unbekannter Weise ändert, ist es sinnvoll, den Wert des Hillholdermomentes abhängig von der zurückgelegten Fahrtstrecke zu reduzieren. Nach einer gewissen Fahrtstrecke ist der Wert des Hillholdermomentes rein rechnerisch auf den Wert Null abgebaut und muß bei einer erneuten Steuerung neu erlernt werden. Ein Übersteuern des übertragbaren Drehmomentes wird dadurch zuverlässig verhindert.

In dem Fall, daß die Prüfung, ob das Kraftfahrzeug rollt, negativ ausgefallen ist, wird zunächst geprüft, ob eine Bremsbetätigung vorliegt. Falls dies nicht zutrifft, wird das übertragbare Drehmoment der Kraftfahrzeugkupplung nicht geändert und es wird zur Berechnung der Fahrgeschwindigkeit zurückverzweigt. In diesem Fall wird das Kraftfahrzeug alleine durch die Kraftfahrzeugkupplung festgehalten, der Wert des Hillholdermomentes ist also das hierzu erforderliche übertragbare Drehmoment.

In dem Fall, daß eine Bremsbetätigung vorliegt, wird eine Bremshaltezeit, d.h. die Zeit seit einem Beginn des Fahrzeugstillstandes mit Bremsbetätigung und eingelegter Fahrstufe, ermittelt. Danach wird geprüft, ob die Bremshaltezeit eine vorgegebene Umschaltzeit erreicht oder überschritten hat. Ist dies nicht der Fall, wird das Maximum aus dem Hillholdermoment und einem Kriechmoment bestimmt und anschließend das übertragbare Drehmoment der Kraftfahrzeugkupplung auf diesen Wert eingestellt. Im anderen Fall wird das Maximum aus dem Hillholdermoment und einem abgesenkten Kriechmoment bestimmt und das übertragbare Drehmoment der Kraftfahrzeugkupplung auf diesen Wert eingestellt. Danach wird jeweils zur Berechnung der Fahrgeschwindigkeit zurückverzweigt. Viele Kraftfahrzeuge, insbesondere solche mit Automatikgetrieben, weisen in einem Kriechmodus einer vorhandenen Kupplungssteuerung eine Standmomentenreduktion auf. D.h. bei einem Bremshalt mit eingelegter Fahrstufe wird das übertragbare Drehmoment zunächst auf das Kriechmoment eingestellt, das so bemessen ist, daß das Kraftfahrzeug auf ebener oder leicht geneigter Fahrbahn nicht zurückrollt. Das Kraftfahrzeug wird dann in der Regel durch eine Bremsbetätigung an einem Vorwärtsrollen gehindert. Zur Schonung von Kupplung und Antriebsmotor sowie zur Vermeidung unnötiger Emissionen wird in solchen Steuerungen häufig nach einer gewissen Bremshaltezeit das übertragbare Drehmoment auf einen niedrigeren Wert, das sogenannte abgesenkte Kriechmoment, eingestellt. Analog dazu wird das übertragbare Drehmoment im vorliegenden Fall jeweils auf den größeren der Werte des Hillholdermomentes und des Kriechmomentes bzw. des abgesenkten Kriechmomentes eingestellt. Durch die Einstellung des übertragbaren Drehmomentes auf das jeweilige Maximum liegt bei einem erneuten Zurückrollen des Kraftfahrzeuges ein jeweils günstigerer Ausgangszustand vor.

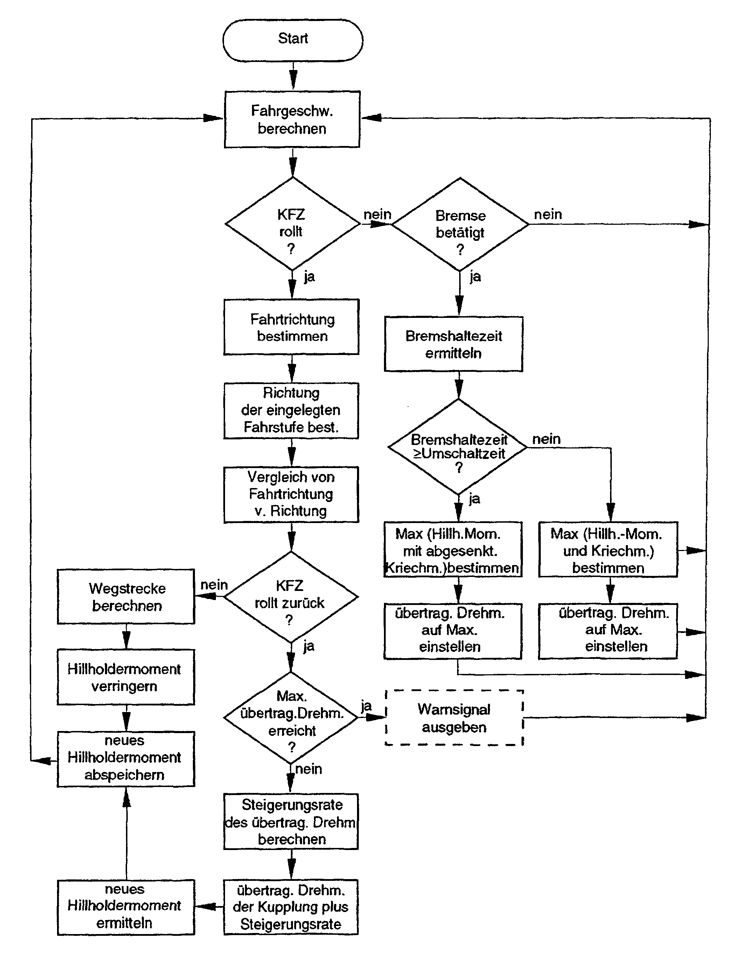

## Patentansprüche

1. Verfahren zur Steuerung einer Kraftfahrzeugkupplung in einem Haltemodus, bei dem Fahrparameter eines Kraftfahrzeuges ermittelt werden und ein ungewolltes Zurückrollen des Kraftfahrzeuges durch eine Auswertung der Fahrparameter erkannt wird, wobei dem ungewollten Zurückrollen solange durch eine Steigerung eines übertragbaren Drehmomentes der Kraftfahrzeugskupplung entgegengewirkt wird, bis das Kraftfahrzeug zum Stillstand gekommen ist, **dadurch gekennzeichnet, daß** bei Erreichen eines Fahrzeugstillstandes ein Wert des momentan übertragbaren Drehmomentes ermittelt und als Hiliholdermoment abgespeichert wird, um als Anfangswert einer erneuten Steuerung verwendet zu werden.

2. Verfahren nach Anspruch 1, **dadurch gekennzeichnet, daß** eine eingelegte Fahrstufe eines Getriebes, eine Fahrtrichtung und eine Fahrgeschwindigkeit des Kraftfahrzeuges als Fahrparameter ermittelt werden.

3. Verfahren nach Anspruch 2, **dadurch gekennzeichnet, daß** eine Steigerungsrate des übertragbaren Drehmomentes der Kraftfahrzeugkupplung in Abhängigkeit von der Fahrgeschwindigkeit gesteuert wird, mit der das Kraftfahrzeug ungewollt Zurückrollen

4. Verfahren nach einem der Ansprüche 1 bis 3, **dadurch gekennzeichnet, daß** das übertragbare Drehmoment bis zu einem vorgegebenen Maximalwert gesteigert wird.

5. Verfahren nach Anspruch 4, **dadurch gekennzeichnet, daß** ein Warnsignal ausgegeben wird, wenn das übertragbare Drehmoment der Kraftfahrzeugkupplung bis zu dem vorgegebenen Maximalwert gesteigert wurde, ohne daß das Kraftfahrzeug innerhalb einer vorgegebenen Zeitspanne zum Stillstand gekommen ist.

6. Verfahren nach Anspruch 4 oder 5, **dadurch gekennzeichnet, daß** eine mechanische Notrücklaufsperre aktiviert wird, wenn das übertragbare Drehmoment der Kraftfahrzeugkupplung bis zu dem vorgegebenen Maximalwert gesteigert wurde, ohne daß das Kraftfahrzeug innerhalb der vorgegebenen Zeitspanne zum Stillstand gekommen ist.

7. Verfahren nach einem der Ansprüche 1 bis 6, **dadurch gekennzeichnet, daß** eine von dem Kraftfahrzeug seit einem Stillstand zurückgelegte Wegstrecke ermittelt wird, und daß der Wert des Hillholdermoments in Abhängigkeit von der zurückgelegten Wegstrecke modifiziert, insbesondere reduziert, und jeweils als neuer Wert des Hillholdermoments abgespeichert wird.

8. Verfahren nach einem der Ansprüche 1 bis 6, **dadurch gekennzeichnet, daß** eine Bremsbetätigung registriert und eine Bremshaltezeit ermittelt wird, daß das übertragbare Drehmoment der Kraftfahrzeugkupplung bis zum Erreichen einer Umschaltzeit auf den größeren der Werte des Hillholdermoments und eines Kriechmoments eingestellt wird, und daß das übertragbare Drehmoment der Kraftfahrzeugkupplung ab einem Überschreiten der Umschaltzeit auf den größeren der Werte des Hillholdermoments und eines abgesenkten Kriechmoments eingestellt wird.

9. Vorrichtung zur Steuerung einer Kraftfahrzeugkupplung in einem Haltemodus, zur Durchführung des Verfahrens nach einem der Ansprüche 1 bis 8, wobei eine auf die Kraftfahrzeugkupplung einwirkende Drehmomentsteuerung vorhanden ist, daß Sensoren zur Ermittlung von Fahrparametern eines Kraftfahrzeuges vorgesehen sind, und daß eine Recheneinheit zur Auswertung der Fahrparameter und zur Erkennung eines ungewollten Zurückrollens des Kraftzeuges vorhanden ist, derart ausgebildet, daß den ungewollten zurückrollen solange durch eine Steigerung eines übertragbaren Drehmomentes des Kraftfahrzeugskupplung entgegenwirkt wird, bis das kraftfahrzeug zum Stillstand gekommen ist, und daß bei Erreichen eines Fahrzeugstillstandes ein Wert des Momentan übertragbarer Drehmomentes ermittelt und als Hillholdermoment abgespeichert wird, um als Anfangswert einer erneuten steuerung verwerdet zu werden.

10. Vorrichtung nach Anspruch 9, **dadurch gekennzeichnet, daß** ein Sensor zur Ermittlung der eingelegten Fahrstufe des Fahrzeuggetriebes, ein Sensor zur Ermittlung der Fahrrichtung des Kraftfahrzeuges, und ein Sensor zur Ermittlung der Fahrgeschwindigkeit des Kraftfahrzeuges vorgesehen ist.

## Claims

1. Method for controlling a motor vehicle clutch in a holding mode, in which driving parameters of a motor vehicle are determined and an unintentional rolling back of the motor vehicle is recognized by an evaluation of the driving parameters, the unintentional rolling back being counteracted by an increase in a transmittable torque of the motor vehicle clutch until the motor vehicle has come to a standstill, **characterized in that** when a vehicle standstill is reached, a value of the transmittable torque at that, moment is determined and is stored as hill-holding moment in order to be used as a starting value for a new controlling process.

2. Method according to Claim 1, **characterized in that** a selected driving position of a gearbox, a direction of travel and a driving speed of the motor vehicle are determined as driving parameters.

3. Method according to Claim 2, **characterized in that** a rate of increase of the transmittable torque of the motor vehicle clutch is controlled as a function of the driving speed at which the motor vehicle is unintentionally rolling back.

4. Method according to one of Claims 1 to 3, **characterized in that** the transmittable torque is increased up to a predetermined maximum value.

5. Method according to Claim 4, **characterized in that** a warning signal is emitted if the transmittable torque of the motor vehicle clutch has increased up to the predetermined maximum value without the motor vehicle having come to a standstill within a predetermined period of time.

6. Method according to Claim 4 or 5, **characterized in that** a mechanical emergency running-back lock is activated if the transmittable torque of the motor vehicle clutch has increased up to the predetermined maximum value without the motor vehicle having come to a standstill within the predetermined period of time.

7. Method according to one of Claims 1 to 6, **characterized in that** a distance covered by the motor vehicle since a standstill is determined, and **in that** the value of the hill-holding moment is modified, in particular reduced, as a function of the distance covered, and is stored in each case as the new value of the hill-holding moment.

8. Method according to one of Claims 1 to 6, **characterized in that** a brake actuation is registered and a brake-holding time is determined, **in that** the transmittable torque of the motor vehicle clutch is set to the larger of the values of the hill-holding moment and a creep moment until a changeover time is reached, and **in that**, after the changeover time is exceeded, the transmittable torque of the motor vehicle clutch is set to the larger of the values of the hill-holding moment and a reduced creep moment.

9. Device for controlling a motor vehicle clutch in a holding mode, for carrying out the method according to one of Claims 1 to 8, there being a torque-controlling means which acts on the vehicle clutch, sensors for determining driving parameters of a motor vehicle being provided, and there being an arithmetic unit for evaluating the driving parameters and for recognizing an unintentional rolling back of the motor vehicle, the said device being designed in such a manner that the unintentional rolling back is counteracted by an increase in a transmittable torque of the motor vehicle clutch until the motor vehicle has come to a standstill, and that, when a vehicle standstill is reached, a value of the transmittable torque at that moment is determined and is stored as hill-holding moment in order to be used as starting value for a new controlling process.

10. Device according to Claim 9, **characterized in that** a sensor for determining the selected driving position of the vehicle gearbox, a sensor for determining the driving direction of the motor vehicle, and a sensor for determining the driving speed of the motor vehicle are provided.

## Revendications

1. Procédé pour commander l'embrayage d'un véhicule dans un mode d'arrêt, selon lequel il est déterminé des paramètres de marche d'un véhicule et détecté un recul inopiné du véhicule par l'intermédiaire d'une analyse des paramètres de marche, une augmentation d'un couple transmissible de l'embrayage du véhicule s'opposant au recul inopiné jusqu'à ce que le véhicule s'immobilise, **caractérisé en ce qu'**une valeur du couple momentanément transmissible est déterminée lorsque le véhicule s'immobilise et mémorisée comme couple d'encliquetage antirecul de sorte à servir de valeur initiale pour une nouvelle opération de commande.

2. Procédé selon la revendication 1, **caractérisé en ce qu'**un cran de marche enclenché d'une boîte de vitesses, un sens de marche et une vitesse de marche du véhicule sont déterminés comme paramètres de marche.

3. Procédé selon la revendication 2, **caractérisé en ce qu'**un taux d'accroissement du couple transmissible de l'embrayage du véhicule est piloté en fonction de la vitesse de marche à laquelle le véhicule recule inopinément.

4. Procédé selon l'une des revendications 1 à 3, **caractérisé en ce que** le couple transmissible est augmenté jusqu'à une valeur maximum prédéfinie.

5. Procédé selon la revendication 4, **caractérisé en ce qu'**un signal d'avertissement est émis lorsque le couple transmissible de l'embrayage du véhicule a été augmenté jusqu'à la valeur maximum prédéfinie sans que le véhicule se soit immobilisé dans un intervalle de temps prédéfini.

6. Procédé selon la revendication 4 ou 5, **caractérisé en ce qu'**un dispositif mécanique de blocage d'urgence est activé lorsque le couple transmissible de l'embrayage du véhicule a été augmenté jusqu'à la valeur maximum prédéfinie sans que le véhicule se soit immobilisé dans un intervalle de temps prédéfini.

7. Procédé selon l'une des revendications 1 à 6, **caractérisé en ce qu'**il est déterminé une distance parcourue par le véhicule depuis un arrêt et **en ce que** la valeur du couple d'encliquetage antirecul est modifiée, notamment réduite, en fonction de la distance parcourue et respectivement mémorisée comme nouvelle valeur du couple d'encliquetage antirecul.

8. Procédé selon l'une des revendications 1 à 6, **caractérisé en ce qu'**un actionnement du freinage est enregistré et qu'un temps de maintien du freinage est déterminé, **en ce que** le couple transmissible de l'embrayage du véhicule est réglé sur la plus grande des valeurs correspondant au couple d'encliquetage antirecul et à un couple d'avance lente jusqu'à ce que soit atteint un temps de commutation, et **en ce que** le couple transmissible de l'embrayage du véhicule est réglé sur la plus grande des valeurs correspondant au couple d'encliquetage antirecul et à un couple d'avance lente réduit dès qu'il y a un dépassement du temps de commutation.

9. Dispositif pour commander l'embrayage d'un véhicule dans un mode d'arrêt, destiné à l'exécution du procédé selon l'une des revendications 1 à 8, une commande de couple agissant sur l'embrayage du véhicule étant présente, des capteurs pour déterminer des paramètres de marche d'un véhicule étant prévus, et une unité de calcul pour l'analyse des paramètres de marche et la détection d'un recul inopiné du véhicule étant présente, ce dispositif étant configuré de telle façon qu'une augmentation d'un couple transmissible de l'embrayage du véhicule s'oppose au recul inopiné jusqu'à ce que le véhicule s'immobilise et qu'une valeur du couple momentanément transmissible est déterminée lorsque le véhicule s'immobilise et mémorisée comme couple d'encliquetage antirecul de sorte à servir de valeur initiale pour une nouvelle opération de commande.

10. Dispositif selon la revendication 9, **caractérisé en ce que** sont prévus un capteur pour déterminer le cran de marche enclenché de la boîte de vitesses du véhicule, un capteur pour déterminer le sens de marche du véhicule et un capteur pour déterminer la vitesse de marche du véhicule.
